# DEMANDE DE BREVET EUROPEEN

(11) **EP 3 103 332 A1**
(43) Date de publication de la demande: **14.12.2016**
(21) Numéro de dépôt: 16173616.0
(22) Date de dépôt: 08.06.2016
(51) Int. Cl.: A01N 25/08, A01N 25/18, A01M 1/10, A01N 49/00, A01N 37/06, A01N 43/90, A01N 31/02, A01N 37/02, A01N 35/02, A01N 65/22, A01N 31/06, A01N 65/44, A01N 65/08, A01N 65/06, A01N 65/28, A01N 65/26, A01P 7/00

(54) **MATERIAU A LIBERATION PROGRESSIVE D'UNE SUBSTANCE ACTIVE**

(30) Priorité: 09.06.2015 FR 1555258
(71) Demandeur: Crea, 74130 Bonneville (FR)
(72) Inventeur: BERLING, Marie, 38700 LE SAPPEY EN CHARTREUSE (FR); BODO, Lionel, 74130 AYZE (FR)
(74) Mandataire: Cabinet Poncet

(57) **Abrégé**

Matériau à libération progressive d'une substance active comprenant un ou plusieurs agents attractifs ou répulsifs. La substance active est mélangée dans une matrice solide constituée par un mélange de cire d'abeille et d'acide stéarique.

## Description

La présente invention concerne un matériau à libération progressive d'une substance active.

L'invention est applicable, sans toutefois y être limitée, au domaine des dispositifs pour la capture d'insectes et des dispositifs pour repousser des insectes, et est plus particulièrement applicable à de tels dispositifs dont le fonctionnement est basé sur la libération d'une substance active attirant ou repoussant les insectes.

On connaît une capsule creuse en polyéthylène basse densité (PEBD) contenant une substance active à l'état liquide. La relative perméabilité du PEBD permet à la substance active de diffuser hors de la capsule pour attirer ou repousser des insectes.

Un premier inconvénient de cette capsule creuse est que le PEBD est assez vite altéré lorsqu'il est exposé aux conditions climatiques extérieures, et notamment au rayonnement ultraviolet solaire. La capsule devient ainsi fragile et susceptible de se rompre accidentellement. Par ailleurs, la substance active contenue dans la capsule peut également fragiliser la capsule en réagissant chimiquement avec le PEBD.

Un autre inconvénient est que les capsules de PEBD peuvent présenter, suite à leur fabrication ou suite à leur transport et/ou manipulation, des zones de défauts (fentes notamment) autorisant une fuite intempestive de la substance active hors de la capsule.

Un autre inconvénient est que les capsules usagées sont le plus souvent jetées volontairement ou perdues involontairement dans la nature par les utilisateurs. Or, le PEBD est une matière plastique polluante pour l'environnement.

Enfin, la diffusion de la substance active hors de la capsule est généralement élevée, voire excessive, en début d'utilisation, et devient ensuite faible jusqu'à la fin de la période d'utilisation de la capsule. Il en résulte que la zone ou les individus à protéger des insectes (par piégeage ou répulsion) bénéficient d'une protection non homogène dans le temps.

Le document DE 10 2012 221966 A1 décrit un matériau à libération progressive d'une substance répulsive, destiné à être appliqué au peigne sur le pelage d'un animal pour protéger ce dernier contre les piqûres d'insectes. Pour ce faire, ce document décrit un matériau contenant de l'acide laurique, qui procure au matériau une consistance plus visqueuse que solide à température ambiante pour faciliter son application au peigne.

Le document WO 95/34200 A1 décrit quant à lui un matériau à libération progressive d'un agent d'éradication.

Un problème proposé par la présente invention est de concevoir un matériau à libération plus progressive d'une substance active, présentant un faible risque de dégradation, et ayant un faible impact écologique pour l'environnement.

Simultanément, la présente invention vise à concevoir un matériau à libération progressive d'une substance active dont les propriétés de diffusion peuvent facilement être adaptées en fonction de l'utilisation envisagée, et qui procure une protection plus homogène dans le temps.

Pour atteindre ces objets ainsi que d'autres, l'invention propose un matériau à libération progressive d'une substance active comprenant un ou plusieurs agents attractifs ou répulsifs ; selon l'invention, la substance active est mélangée dans une matrice solide constituée par un mélange de cire d'abeille avec de l'acide stéarique et/ou de l'acide palmitique.

L'invention provient de la découverte par la demanderesse que la capacité de diffusion du matériau selon l'invention est assez facilement réglable par les proportions relatives entre de l'acide stéarique et/ou de l'acide palmitique d'une part et de la cire d'abeille d'autre part. Plus haute est la proportion en cire d'abeille, plus importante est la diffusion. Plus haute est la proportion en acide stéarique et/ou en acide palmitique, plus faible est la diffusion.

De plus, la diffusion de la substance active par le matériau selon l'invention s'est avérée plus constante au cours du temps que celle assurée par une capsule de PEBD, ce qui procure une meilleure protection.

La substance active est mêlée directement dans la matrice à l'état liquide avant sa solidification. La matrice est à l'état solide lors de l'utilisation du matériau. Il n'y a pas de risque de fuite intempestive de substance active liquide après solidification de la matrice.

Enfin, la matrice consiste en un mélange très simple de deux constituants biodégradables. L'environnement n'est ainsi pas pollué si le matériau est abandonné dans la nature.

Avantageusement, la quantité de cire d'abeille dans le mélange constituant la matrice peut être d'au plus 50% en masse (le complément jusqu'à 100% étant assuré par de l'acide stéarique et/ou de l'acide palmitique). Une telle proportion en cire d'abeille limite efficacement les risques d'attirer les insectes auxiliaires utiles à l'homme et à l'environnement (tels que les abeilles ou les bourdons par exemple) lorsque le matériau est utilisé dans un piège pour la capture d'insectes.

De préférence, la quantité de cire d'abeille dans le mélange constituant la matrice est d'au moins 10% en masse. Une telle proportion de cire d'abeille procure un mélange plus homogène lorsqu'une substance hydrophile (pouvant être la substance active) ou certains solvants (éthanol notamment) sont ajoutés.

Avantageusement, la substance active peut être mélangée dans la matrice avec un solvant, et/ou un tensio-actif, et/ou un antioxydant, et/ou un anti-UV.

De préférence, la substance active est mélangée dans la matrice avec un colorant. En prévoyant des couleurs prédéterminées pour des utilisations particulières (attraction ou répulsion d'insecte(s) spécifique(s) par exemple), un utilisateur pourra facilement identifier l'utilisation du matériau qu'il a sous les yeux.

Dans un premier mode de réalisation, la substance active comprend une phéromone ou une kairomone. Le matériau est alors tout particulièrement adapté pour être utilisé comme substance attractive dans un piège pour la capture d'insectes. Ce piège peut être utilisé à des fins d'éradication de populations d'insectes ou à des fins de comptage pour la surveillance de l'équilibre biologique d'un lieu.

Avantageusement, la substance active peut comprendre au moins un constituant choisi dans le groupe comprenant le Z-8 dodécényl acétate, 1,7-dioxaspiro[5-5]undécane, 8-10-dodécadién-1-ol (codlémone), éthyl (E,Z)-2,4-décadiénoate (ester de poire), E,E-8,10-dodécadién-1-yl acétate, acide acétique, (E,Z)-8,10-tetradécadiénal, heptanal, (Z)-13-hexadécén-11-yn-1-yl acétate, hexanal, cis-11-hexadécénal, géranyl butyrate, géranyl hexanoate, géranyl octanoate, Z-8 dodécényl acétate, Z-8 dodécénol, 3E,8Z,11Z-tetradécatrienylacétate, Z-3 décen-1-ylacétate, Z-5 décen-1-ylacétate, (Z)-hexadéc-11-énal, (E)-hexadéc-11-énal, Z,Z-7,11-hexadécadiénal.

Dans un second mode de réalisation, la substance active peut comprendre un répulsif. Le matériau est alors tout particulièrement adapté pour être utilisé comme substance répulsive dans un diffuseur pour la protection d'un lieu. On peut ainsi écarter des insectes à l'écart d'une zone fréquentée par des humains ou à l'écart d'une zone où se tiennent des cultures (arbres fruitiers, plants de légumes, etc.).

Avantageusement, la substance active peut comprendre au moins un constituant choisi dans le groupe comprenant l'huile essentielle de lavandin (N° CAS 91722-69-9), le géraniol (N° CAS 106-24-1), le citridiol (N° CAS 42822-86-6), l'huile essentielle de citronnelle, l'huile essentielle de géranium, l'huile essentielle de térébenthine, l'huile essentielle de clou de girofle, l'huile essentielle de menthe poivrée, l'huile essentielle de patchouli, l'huile essentielle de margosa (N° CAS 84696-25-3).

D'autres objets, caractéristiques et avantages de la présente invention ressortiront de la description suivante de modes de réalisation particuliers, faite en relation avec les figures jointes, parmi lesquelles :
- la figure 1 est un graphique illustrant la diffusion au cours du temps d'une substance active contenue dans une capsule en PEBD de l'art antérieur ;
- la figure 2 est un graphique illustrant la diffusion au cours du temps de la même substance active que celle de la figure 1, mais contenue dans deux exemples de matériau selon l'invention ;
- la figure 3 est un graphique illustrant la diffusion au cours du temps d'une autre substance active que celle de la figure 1, contenue dans deux exemples de matériau selon l'invention ;
- la figure 4 est un graphique illustrant la diffusion au cours du temps d'une autre substance active que celle de la figure 1, contenue dans un exemple de matériau selon l'invention et dans un matériau ne faisant pas partie de l'invention ;
- la figure 5 est un graphique illustrant la diffusion au cours du temps d'une autre substance active que celle de la figure 1, contenue dans un matériau ne faisant pas partie de l'invention ; et
- la figure 6 est un graphique illustrant la diffusion au cours du temps de la même substance active que celle de la figure 5, mais contenue dans un exemple de matériau selon l'invention.

Un procédé de fabrication d'un matériau selon l'invention est expliqué ci-après.

Lors d'une première étape, de la cire d'abeille et de l'acide stéarique et/ou de l'acide palmitique sont introduits à l'état solide dans un récipient, puis chauffés, en agitant pour homogénéiser le mélange, jusqu'à environ 80°C pour obtenir un mélange liquide de cire d'abeille et d'acide stéarique et/ou d'acide palmitique fondus. La proportion en masse de cire d'abeille est comprise entre 10% et 50%, le complément à 100% étant de l'acide stéarique et/ou de l'acide palmitique.

De bons résultats ont été obtenus avec un composé d'acides gras C16 (acide palmitique) et C18 (acide stéarique), répertorié sous le N° CAS 67701-03-5, mélangé à de la cire d'abeille.

Après fusion complète, la température de consigne du récipient est ensuite réglée à une température inférieure à 80°C pour maintenir le mélange à l'état liquide.

Pour limiter les pertes de substance active par évaporation, la substance active (phéromone, kairomone ou répulsif) est ajoutée lors d'une deuxième étape dans le mélange fondu de cire d'abeille et d'acide stéarique et/ou d'acide palmitique présentant une température au moins inférieure à 60°C.

Si nécessaire, la substance active peut être dissoute dans un solvant (tel que de l'éthanol par exemple) avant son ajout dans le mélange fondu de cire d'abeille et d'acide stéarique et/ou d'acide palmitique. Un antioxydant et/ou un anti-UV peuvent également être ajoutés à la substance active avant son incorporation dans le mélange fondu de cire d'abeille et d'acide stéarique et/ou d'acide palmitique.

Un tensio-actif peut être ajouté. Celui-ci est en général ajouté au mélange de cire d'abeille et d'acide stéarique et/ou d'acide palmitique pendant son chauffage pour fusion.

Un colorant peut également être ajouté. Dans ce cas, il est généralement ajouté au mélange de cire d'abeille et d'acide stéarique et/ou d'acide palmitique pendant son chauffage pour fusion.

Après ajout de la substance active (et de ses éventuels adjuvants) dans le mélange fondu de cire d'abeille et d'acide stéarique, on agite pour homogénéiser la répartition de la substance active. On procède alors à une émulsion pendant 5 à 30 secondes.

Le mélange obtenu est ensuite versé lors d'une troisième étape dans les empreintes d'un moule. Après refroidissement jusqu'à solidification de la matrice (dans une enceinte réfrigérée à 6°C ou moins par exemple), on obtient des petits blocs de matériau comprenant la substance active mélangée dans une matrice solide constituée d'un mélange de cire d'abeille et d'acide stéarique.

Les petits blocs sont extraits du moule lors d'une quatrième étape et sont ensuite placés dans un sachet opaque imperméable scellé, de préférence sous vide, pour leur stockage au congélateur.

Par « sachet imperméable », on entend désigner un sachet capable de bloquer ou retenir de façon suffisamment forte la substance active et capable de protéger de façon satisfaisante les blocs de l'air. L'opacité du sachet permet de limiter les risques de dégradation des blocs par les ultraviolets.

Un exemple de composition de matériaux ayant procuré des résultats de diffusion satisfaisants de phéromones ou kairomones est donné ci-après :

| | **Désignation** | **N° CAS** | **Proportion (en masse) dans la matrice** | **Proportion (en masse) dans le mélange total** |
|---|---|---|---|---|
| **Matrice** | Mélange d'acide stéarique et d'acide palmitique | 67701-03-5 | 50-90% | 95-98% |
| | Cire d'abeille | 8006-40-4 | 10-50% | |
| **Substance active** | Phéromone(s) et/ou kairomone(s) choisie(s) en fonction du ou des insectes visés | | | 0,1 - 2 % |
| **Solvant** | Ethanol | 64-17-5 | | 0-2% |
| **Adjuvants** | | | | |
| -Antioxydant | 2,4,6-TRI-TERT-BUTYLPHENOL | 732-26-3 | | 0,05 - 0,5 % |
| -Anti-UV | 2-HYDROXY-4-N-OCTYLOXYBENZOPHENONE | 1843-05-6 | | 0,05 - 0,1 % |
| -Tensio-actif | 75 % en masse de Span® 85 et 25 % en masse de Tween® 60 | 26266-58-0 9005-67-8 | | 1 % |
| -Colorant | Au choix | divers | | < 1 % |

On pourra utiliser les substances actives (phéromones ou kairomones) indiquées ci-après pour les utilisations explicitées en correspondance :

| **Substance active** | **N° CAS** | **Utilisation** |
|---|---|---|
| Z-8 dodécényl acétate | 28079-04-1 | piégeage de la carpocapse des prunes (*grapholita funebrana)* |
| 1,7-dioxaspiro[5-5]undécane | 180-84-7 | piégeage du ver de l'olive (*bactrocera oleae*) |
| 8-10-dodécadién-1-ol | 33956-49-9 | piégeage du carpocapse des pommes et des poires (*cydia pomonella)* |
| Ethyl (E,Z)-2,4-décadiénoate (ester de poire) | 3025-30-7 | piégeage du carpocapse des pommes et des poires (*cydia pomonella)* |
| E,E-8,10-dodécadién-1-yl acétate | 53880-51-6 | piégeage du carpocapse des pommes et des poires (*cydia pomonella)* |
| acide acétique | 64-19-7 | piégeage du carpocapse des pommes et des poires (*cydia pomonella)* |
| (E,Z)-8,10-tetradécadiénal | 247167-79-9 | piégeage de la mineuse des marronniers (*cameraria ohridella*) |
| Heptanal | 111-71-1 | piégeage de la mouche de la cerise (*rhaqoletis cerasi*) |
| (Z)-13-hexadécén-11-yn-1-yl acétate | 78617-58-0 | piégeage de la chenille processionnaire du pin *(thaumetopoea pityocampa)* |
| Hexanal | 66-25-1 | piégeage de la mouche de la carotte (*psila rosae*) |
| cis-11-hexadécénal | 53939-28-9 | piégeage de la teigne du poireau (*acrolepiopsis assectella)* |
| géranyl butyrate | 106-29-6 | piégeage des taupins (*agriotes sordidus, agriotes sputator, agriotes lineatus, agriotes obscurus*) |
| géranyl hexanoate | 10032-02-7 | |
| géranyl octanoate | 51532-26-4 | |
| Z-8 dodécényl acétate | 28079-04-1 | tordeuse orientale du pêcher (*cydia molesta*) |
| Z-8 dodécénol | 40642-40-8 | |
| 3E-8Z-11Z-tetradécatrienylacétate | 163041-94-9 | piégeage de la mineuse de la tomate (*tutta absoluta*) |
| Z-3 décen-1-ylacétate | 81634-99-3 | piégeage de la chenille processionnaire du chêne (*thaumetopoea processionea*) |
| Z-5 décen-1-ylacétate | 67446-07-5 | |
| (Z)-hexadéc-11-énal | 53939-28-9 | piégeage de la pyrale du buis (*cydalima perspectalis*) |
| (E)-hexadéc-11-énal | 57491-33-5 | |
| (Z,Z)-7,11-hexadécadiénal | 96883-53-3 | piégeage de la mineuse des agrumes (*phyllocnistis citrella*) |

Un exemple de composition de matériaux ayant procuré des résultats de diffusion satisfaisants de répulsifs est donné ci-après :

| | **Désignation** | **N° CAS** | **Proportion (en masse) dans la matrice** | **Proportion (en masse) dans le mélange total** |
|---|---|---|---|---|
| **Matrice** | Mélange d'acide stéarique et d'acide palmitique | 67701-03-5 | 50-90% | 68-88% |
| | Cire d'abeille | 8006-40-4 | 10-50% | |
| **Substance active** | Répulsif(s) choisi(s) en fonction du ou des insectes visés | | | 10-30% |
| **Adjuvants** | | | | |
| -Tensio-actif | 75 % en masse de Span® 85 | 26266-58-0 | | 1 % |
| | et 25 % en masse de Tween® 60 | 9005-67-8 | | |
| -Colorant | Au choix | divers | | 0 - 1 % |

On pourra utiliser les substances actives (répulsifs) indiquées ci-après pour les utilisations explicitées en correspondance :

| **Substance active** | **N° CAS** | **Utilisation** |
|---|---|---|
| huile essentielle de lavandin | 91722-69-9 | répulsion des moustiques (*aèdes caspius, aedes detritus, culex pipiens, aedes albopictus),* des puces et des tiques |
| géraniol | 106-24-1 | répulsion des moustiques (*aedes caspius, aedes detritus, culex pipiens, aedes albopictus*) |
| citridiol | 42822-86-6 | répulsion des moustiques (*aedes caspius, aedes detritus, culex pipiens, aedes albopictus*) |
| huile essentielle de citronnelle | | répulsion des moustiques (*aedes caspius, aedes détritus*, *culex pipiens, aedes albopictus*) |
| huile essentielle de géranium | | répulsion des moustiques (*aedes caspius, aedes detritus, culex pipiens, aedes albopictus*) |
| huile essentielle de térébenthine | | répulsion des moustiques (*aedes caspius, aedes détritus*, *culex pipiens, aedes albopictus*) |
| huile essentielle de clou de girofle | | répulsion des moustiques (*aedes caspius, aedes détritus*, *culex pipiens, aedes albopictus*) |
| huile essentielle de menthe poivrée, | | répulsion des moustiques (*aedes caspius, aedes détritus*, *culex pipiens, aedes albopictus*) |
| huile essentielle de patchouli | | répulsion des moustiques (*aedes caspius, aedes détritus*, *culex pipiens, aedes albopictus*) |
| huile essentielle de margosa | | répulsion des puces et des tiques |

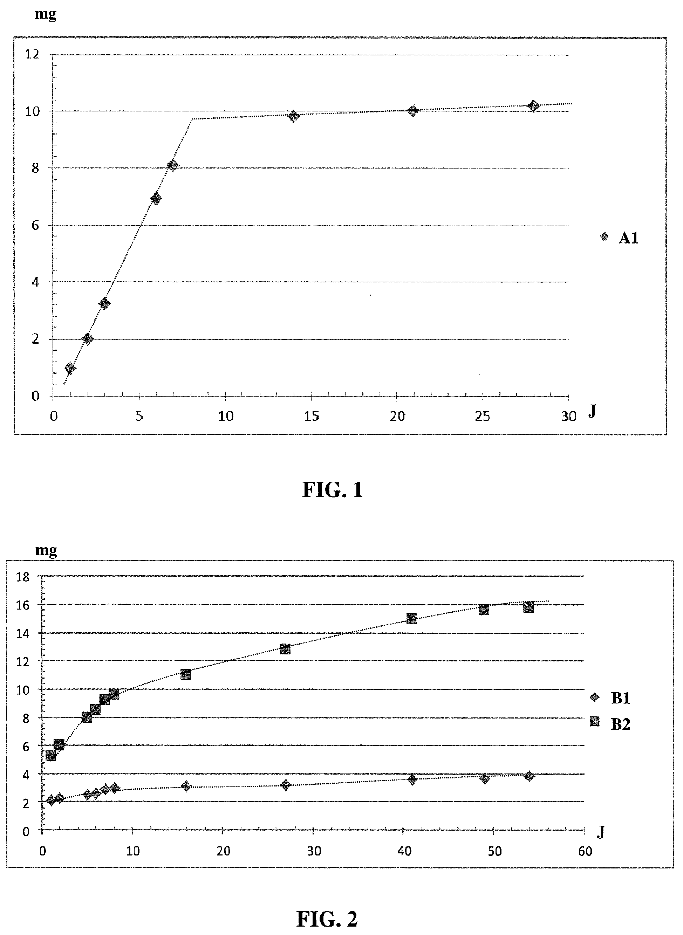

Sur la figure 1 est illustrée une courbe A1 de diffusion d'une substance active (heptanal) pour attirer la mouche de la cerise (*rhagoletis cerasi*) contenue dans une capsule en PEBD de l'art antérieur. En ordonnée est indiquée la quantité (en mg) d'heptanal qui a diffusé hors de la capsule. En abscisse est indiqué le jour où est effectuée la mesure. La quantité d'heptanal diffusée hors de la capsule est évaluée par pesée de la capsule.

On observe que la vitesse d'évaporation est forte jusqu'au cinquième jour. Puis la vitesse d'évaporation décroît fortement. Le piégeage des mouches de la cerise sera donc plus efficace lors des cinq premiers jours, et sera hélas d'une efficacité moindre après.

Sur la figure 2 sont illustrées des courbes B1 et B2 de diffusion de la même substance active que sur la figure 1 (heptanal) pour attirer la mouche de la cerise, contenue cette fois dans une matrice solide qui est un mélange selon l'invention de cire d'abeille avec un composé d'acide stéarique et d'acide palmitique (N° CAS 67701-03-5). En ordonnée est indiquée la quantité (en mg) de substance active qui diffuse hors de la matrice solide. En abscisse est indiqué le jour où est effectuée la mesure. La quantité de substance active diffusée hors de la matrice solide est évaluée par pesée du matériau.

La courbe B1 est celle d'un matériau selon l'invention ayant une matrice contenant 25% de cire d'abeille et 75% d'un composé d'acide stéarique et d'acide palmitique (N° CAS 67701-03-5). La courbe B2 est celle d'un matériau selon l'invention qui diffère de celui de la courbe B2 en ce que la matrice contient 50% de cire d'abeille et 50% d'un composé d'acide stéarique et d'acide palmitique (N° CAS 67701-03-5) (autant de cire d'abeille que d'acide stéarique et palmitique en masse).

On observe que la diffusion au cours du temps est plus linéaire au cours du temps que sur la figure 1. Par ailleurs, la vitesse de diffusion est plus élevée lorsque la matrice comporte une proportion plus importante en masse de cire d'abeille.

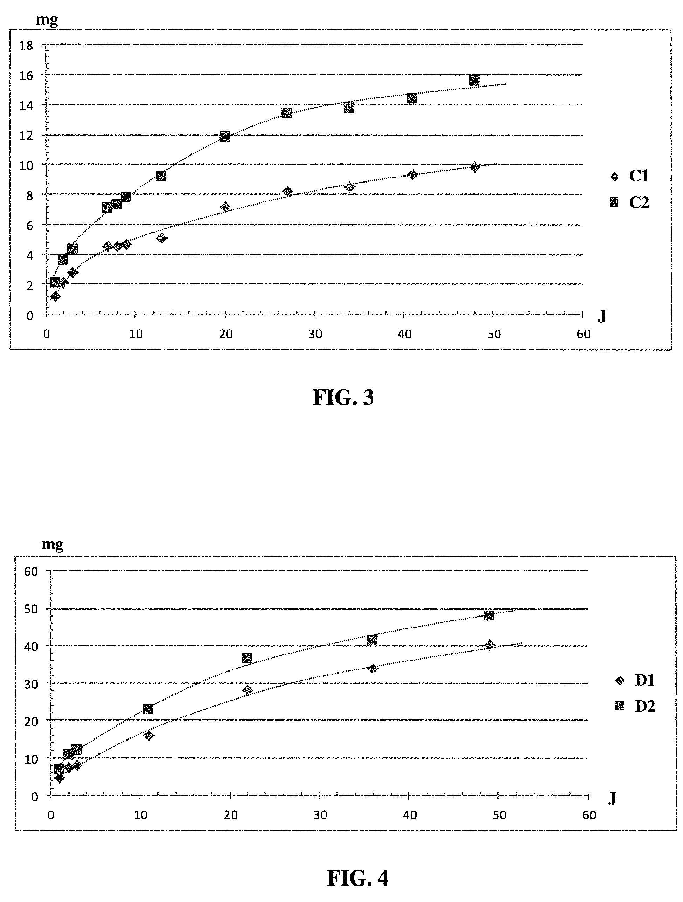

Sur la figure 3 est illustrée une courbe de diffusion d'une autre substance active (Z-8 dodécényl acétate) pour attirer la carpocapse des prunes *(grapholita funebrana),* contenue dans une matrice solide qui est un mélange de cire d'abeille et d'un composé d'acide stéarique et d'acide palmitique (N° CAS 67701-03-5). En ordonnée est indiquée la quantité (en mg) de substance active qui diffuse hors de la matrice solide. En abscisse est indiqué le jour où est effectuée la mesure. La quantité de substance active diffusée hors de la matrice solide est évaluée par pesée du matériau.

La courbe C1 est celle d'un matériau selon l'invention ayant une matrice contenant 25% de cire d'abeille et 75% d'un composé d'acide stéarique et d'acide palmitique (N° CAS 67701-03-5). La courbe C2 est celle d'un matériau selon l'invention qui diffère de celui de la courbe C1 en ce que la matrice contient 50% de cire d'abeille et 50% d'un composé d'acide stéarique et d'acide palmitique (N° CAS 67701-03-5) (autant de cire d'abeille que d'acide stéarique et palmitique en masse).

Là encore, on observe que la diffusion au cours du temps est plus linéaire que sur la figure 1. Par ailleurs, la vitesse de diffusion est plus élevée lorsque la matrice comporte 50% en masse de cire d'abeille.

Sur la figure 4 est illustrée une courbe de diffusion d'une autre substance active ((Z)-13-hexadécén-11-yn-1-yl acétate) pour attirer la chenille processionnaire du pin *(thaumetopoea pityocampa),* contenue dans une matrice solide qui est un mélange selon l'invention de cire d'abeille et d'un composé d'acide stéarique et d'acide palmitique (N° CAS 67701-03-5). En ordonnée est indiquée la quantité (en mg) de substance active qui diffuse hors de la matrice solide. En abscisse est indiqué le jour où est effectuée la mesure. La quantité de substance active diffusée hors de la matrice solide est évaluée par pesée du matériau.

La courbe D1 est celle d'un matériau ne faisant pas partie de l'invention, ayant une matrice contenant 100% d'acide stéarique. La courbe D2 est celle d'un matériau selon l'invention dont la matrice contient 50% de cire d'abeille et 50% d'un composé d'acide stéarique et d'acide palmitique (N° CAS 67701-03-5) (autant de cire d'abeille que d'acide stéarique et palmitique en masse).

On observe que la diffusion au cours du temps est plus linéaire que sur la figure 1. La comparaison entre les courbes D1 et D2 met en évidence l'augmentation de vitesse de diffusion liée à la présence de cire d'abeille en plus grande quantité dans la matrice.

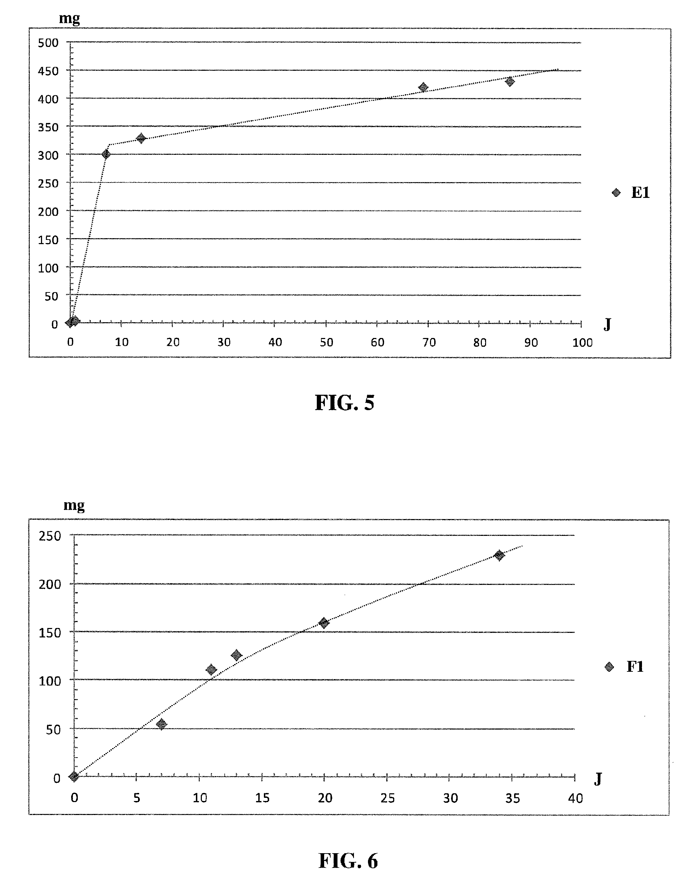

Sur la figure 5 est illustrée une courbe E1 de diffusion d'une autre substance active (géraniol 2E-3,7-diméthylocta-2,6-dien-1-ol) pour repousser les moustiques *(aedes caspius, aedes detritus, culex pipiens, aedes albopictus),* les puces et les tiques, contenue dans un matériau à matrice comportant 100% d'acide stéarique (ne faisant pas partie de l'invention). En ordonnée est indiquée la quantité (en mg) de géraniol qui a diffusé hors de la matrice. En abscisse est indiqué le jour où est effectuée la mesure. La quantité de substance active diffusée hors de la matrice solide est évaluée par pesée du matériau.

On observe que la vitesse de diffusion est forte jusqu'au cinquième jour. Puis la vitesse de diffusion décroît fortement. L'effet répulsif contre les moustiques, puces et tiques sera donc plus efficace lors des cinq premiers jours, et sera hélas moins efficace après.

Sur la figure 6 est illustrée une courbe F1 de diffusion de la même substance active que sur la figure 5 (géraniol 2E-3,7-diméthylocta-2,6-dien-1-ol), contenue cette fois dans une matrice solide qui est un mélange selon l'invention de cire d'abeille et d'un composé d'acide stéarique et d'acide palmitique (N° CAS 67701-03-5). En ordonnée est indiquée la quantité (en mg) de substance active qui diffuse hors de la matrice solide. En abscisse est indiqué le jour où est effectuée la mesure. La quantité de substance active diffusée hors de la matrice solide est évaluée par pesée du matériau.

Le matériau selon l'invention utilisé a une matrice contenant 50% de cire d'abeille et 50% d'un composé d'acide stéarique et d'acide palmitique (N° CAS 67701-03-5) (autant de cire d'abeille que d'acide stéarique et palmitique en masse).

On observe que la diffusion au cours du temps est plus linéaire que sur la figue 5. Le matériau procure ainsi une protection plus homogène au cours du temps.

La présente invention n'est pas limitée aux modes de réalisation qui ont été explicitement décrits, mais elle en inclut les diverses variantes et généralisations contenues dans le domaine des revendications ci-après.

## Revendications

1. Matériau à libération progressive d'une substance active comprenant un ou plusieurs agents attractifs ou répulsifs, **caractérisé en ce que** la substance active est mélangée dans une matrice solide constituée par un mélange de cire d'abeille avec de l'acide stéarique et/ou de l'acide palmitique.

2. Matériau selon la revendication 1, **caractérisé en ce que** la quantité de cire d'abeille dans le mélange constituant la matrice est d'au plus 50% en masse.

3. Matériau selon l'une des revendications 1 ou 2, **caractérisé en ce que** la quantité de cire d'abeille dans le mélange constituant la matrice est d'au moins 10% en masse.

4. Matériau selon l'une quelconque des revendications 1 à 3, **caractérisé en ce que** la substance active est mélangée dans la matrice avec un solvant.

5. Matériau selon l'une quelconque des revendications 1 à 4, **caractérisé en ce que** la substance active est mélangée dans la matrice avec un tensio-actif.

6. Matériau selon l'une quelconque des revendications 1 à 5, **caractérisé en ce que** la substance active est mélangée dans la matrice avec un antioxydant.

7. Matériau selon l'une quelconque des revendications 1 à 6, **caractérisé en ce que** la substance active est mélangée dans la matrice avec un anti-UV.

8. Matériau selon l'une quelconque des revendications 1 à 7, **caractérisé en ce que** la substance active est mélangée dans la matrice avec un colorant.

9. Matériau selon l'une quelconque des revendications 1 à 8, **caractérisé en ce que** la substance active comprend une phéromone ou une kairomone.

10. Matériau selon la revendication 9, **caractérisé en ce que** la substance active comprend au moins un constituant choisi dans le groupe comprenant le Z-8 dodécényl acétate, 1,7-dioxaspiro[5-5]undécane, 8-10-dodécadién-1-ol (codlémone), éthyl (E,Z)-2,4-décadiénoate (ester de poire), E,E-8,10-dodécadién-1-yl acétate, acide acétique, (E,Z)-8,10-tetradécadiénal, heptanal, (Z)-13-hexadécén-11-yn-1-yl acétate, hexanal, cis-11-hexadécénal, géranyl butyrate, géranyl hexanoate, géranyl octanoate, Z-8 dodécényl acétate, Z-8 dodécénol, 3E-8Z-11 Z-tetradécatrienylacétate, Z-3 décen-1-ylacétate, Z-5 décen-1-ylacétate, (Z)-hexadéc-11-énal, (E)-hexadéc-11-énal, Z,Z-7,11-hexadécadiénal.

11. Matériau selon l'une quelconque des revendications 1 à 8, **caractérisé en ce que** la substance active comprend un répulsif.

12. Matériau selon la revendication 11, **caractérisé en ce que** la substance active comprend au moins un constituant choisi dans le groupe comprenant l'huile essentielle de lavandin, le géraniol, le citridiol, l'huile essentielle de citronnelle, l'huile essentielle de géranium, l'huile essentielle de térébenthine, l'huile essentielle de clou de girofle, l'huile essentielle de menthe poivrée, l'huile essentielle de patchouli, l'huile essentielle de margosa.

13. Piège pour la capture d'insectes, comprenant un matériau selon l'une des revendications 9 ou 10.

14. Diffuseur pour repousser des insectes, comprenant un matériau selon l'une des revendications 11 ou 12.

15. Utilisation d'un matériau selon l'une des revendications 9 ou 10 pour l'attraction d'au moins un insecte choisi dans le groupe comprenant *grapholita funebrana, bactrocera oleae, cydia pomonella, cameraria ohridella, rhagoletis cerasi, thaumetopoea pityocampa, psila rosae, acrolepiopsis assectella, agriotes sordidus, agriotes sputator, agriotes lineatus, agriotes obscurus, cydia molesta, tutta absoluta, thaumetopoea processionea, cydalima perspectalis, phyllocnistis citrella.*

16. Utilisation d'un matériau selon l'une des revendications 11 ou 12 pour repousser au moins un insecte choisi dans le groupe comprenant les moustiques *aedes caspius,* les moustiques *aedes détritus,* les moustiques *culex pipiens,* les moustiques *aedes albopictus,* les puces et les tiques.
